**Europäisches Patentamt**

**European Patent Office**

**Office européen des brevets**

(11) Publication number: **0 219 705**
**B1**

(12) **EUROPEAN PATENT SPECIFICATION**

(45) Date of publication of patent specification: **03.05.89**

(21) Application number: **86113058.1**

(22) Date of filing: **23.09.86**

(51) Int. Cl.⁴: **F 16 L 37/12,** F 16 L 37/08, F 16 L 37/28

(54) **Improved watertight joint for flexible pipes.**

(30) Priority: **22.10.85 IT 8342985**

(43) Date of publication of application: **29.04.87 Bulletin 87/18**

(45) Publication of the grant of the patent: **03.05.89 Bulletin 89/18**

(84) Designated Contracting States: **DE FR GB**

(56) References cited:
**DE-B-1 947 939**
**DE-B-2 734 117**

(73) Proprietor: **PROTEC PORDENONESE S.p.A.**
**Via Maniago 8 Zona Industriale**
**I-33080 S. Quirino (PN) (IT)**

(72) Inventor: **Munini, Dino**
**I-33080 S. Quirino (PN) (IT)**

(74) Representative: **D'Agostini, Giovanni, Dr.**
**D'AGOSTINI ORGANIZZAZIONE n. 17 via**
**G.Giusti**
**I-33100 Udine (IT)**

Courier Press, Leamington Spa, England.

## Description

The present invention relates an IMPROVED WATERTIGHT JOINT FOR FLEXIBLE PIPES.

At the present state of the art for the joining of flexible pipes, for example the removable and flexible watering garden conduits, joints connected by means of a screw thread are well used. The connecting device consists essentially in three pieces; of these:

— one is a rigid plastic tubular intermediate connecting piece including preferably watertight toroidal gasket means, alternatively progressive widening in the respective opposite outside diameter realizing a conic shape near a flange (so that the two pipe ends to be connected can be pulled on);

— the other pieces are two screwable clamps into which the opposite pipe ends are placed and which, being screwed to first one, cover and tighten overlapping fitting pieces and make the two joints watertight.

Other solutions present as well the tubular intermediate connecting piece in rigid plastic with two opposite cone-shaped ends, where the narrowest ends are the parts to be fitted into the flexible pipes; to this purpose a clamping device, which will tighten the pipe, is added.

A further example of joint for flexible pipes consists of two pieces: the first piece is a female fitting device which is applied to the pipe end; the second piece is a male fitting device which is applied to the other pipe end. The two pieces are connected when one is plugged into the other, that is the male joint is inserted into the female joint, which has a first abutting gasket; being provided a third piece in the form of a ring nut with watertight ring gasket, which is placed outside either the first or the second piece, and can be screwed in, thus allowing the connection of the two pieces. This system is also conceived without the third piece (the ring nut); in this case a threaded ring is realized directly inside or outside to the first jointing piece and a corresponding counterthreading is provided outside or inside to the other jointing piece. In any case the pipe ends are joined to the connecting jointing pieces according to different systems, even though the well known hose clamps are mostly used.

The respective drawbacks of the above-mentioned solutions, are essentially the following: the joints with hose fittings of the first type, even though reliable, are not practical and functional, since complex operations are necessary in order to connect and disconnect the pipes and eventually these, in most cases, cause the pipe or the joint to break. Moreover not always the joint is reliable, since it can easily have leaks. Therefore the old traditional system with hose clamps is usually preferred, however this presents the well known difficulties and it is not practical being further dangerous for the hands.

A first object of the present invention is to obviate the above-mentioned drawbacks by manufacturing an inexpensive joint, which should be easily used either in the assembling or disassembling; it should also be highly reliable and quickly connectable.

To this purpose there are also well known quick-connection joints, but all these are generally extremely complex and expensive so that their use in the said field is unprofitable; actually earth would prevent a device of this type from working. This kinds of joints are made generally with a metal and plastic assembled elements can be easily spoiled and clogged while is handled on the ground.

A prior art joint having the features of the precharacterising part of claim 1 is described in DE—B2—2734117.

The present invention solves the problems by providing a watertight joint as defined in claim 1.

The advantages brought about by this innovation consist essentially in that a quick-connection joint is made completely in molded plastic material of low cost and highest reliability.

Here below the invention is described in further detail with the help of exemplifying drawings, which illustrate an example of joint between a hose nozzle and a pipe, preferably a flexible one; but it is obvious that the same joint can be realized also for the connection between pipes by using the same male-female system.

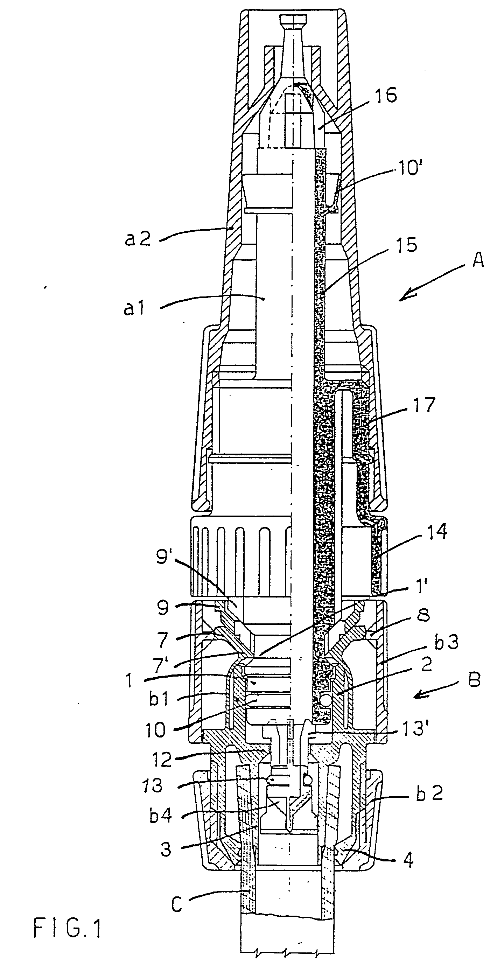

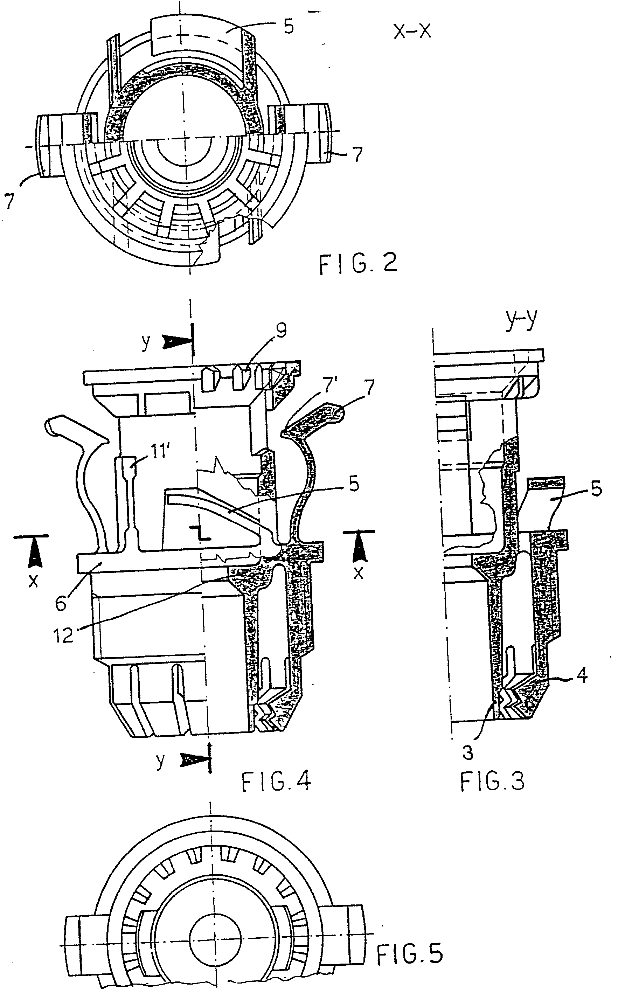

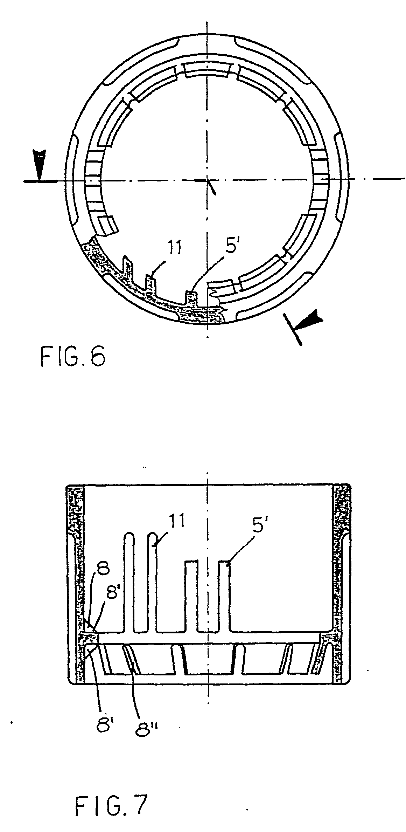

Figure 1 illustrates in axial half section the joint, which, in this particular case, is connected to a hose nozzle; Figure 2 shows a front view, from the side where the pipe is fitted on, of the female part in a half section X—X, which is crosswise in comparison with Figure 4; Figure 3 shows a view in axial half section Y—Y according to Figure 4; Figure 4 represents a view in axial half section and partial cross section; Figure 5 shows a front view of the joining side; Figure 6 and Figure 7 represent the bushing which controls the female part, respectively in a front view and in an axial section.

More specifically the are parts made in molded plastic material, and consist of a traditional male part (A) with a corresponding male fitting piece (1), which is pulled watertightly into a corresponding female fitting piece (2) of a female part (B), particularly suitable for flexible pipes (C).

The female part consists of a female body (b1), a tightening ring nut (b2) and a coupling bushing (b3), and preferably an inside comeback preventer valve (b4).

According to the invention the female body has, on the side opposite to the joining side, a small tube (3), cone-shaped externally, which is housed in a toothed crown (4) where the teeth, molded together with the female body, are elastically and roundly compressible towards the tube (C) by the said ring nut (b2), which, being screwed in, clamps by said teeth the tube.

Further the said female body (b1) has outside, on the joining side, a ring bushing (b3), which can be moved in a lengthwise direction by thrusting helicoidal ring springs (5) molded integrally with at least one corresponding abutting end (6) of the respective female body of the Joint piece, being further provided at least two elastic lengthwise tongues (7), integrally molded together with the female body as well, stretching out from the female body and tooth-shaped inside (7'), so that, when the said bushing is lengthwise moved towards the joining end, these are forced to bend by a projecting ring inside the bushing (8), and to fit inside corresponding engaging notches (1') (as can be observed in Figure 1). On the contrary the pipe is disconnected by pulling back the bushing (b3), thus moving it towards the opposite side against the said stopping springs (5); in a similarly simple way the pipe is connected by pressing the male piece (1) against the projecting teeth (7'), which bend in order to allow the engaging. In a preferred solution the abuting side of the female joint (b1) has a toothed flange (9) engaging corresponding fitting teeth on the male part (9') in order to prevent, if necessary, a possible rotation.

In the drawing a toroidal gasket has been added for watertightness (10), but this can be better replaced by a bell flange, like to watertight flange (10') molded in the hose nozzle. This bell flange is molded directly on the male body around the male fitting piece (1) and replaces the toroidal gasket, being of elastic and yielding material. The water thrust itself in counterpression creates watertightness in a one-way direction.

Inside the bushing (b3), besides the projecting ring (8) with conic guiding ribs (8') for the clasping tongues (7) and the fastening or stopping springs (8''), also lengthwise guiding ribs (11), engaging ribs on the female body, and the axial springs stops (5, 5') are molded. In a favourable solution a shoulder (12) is conceived inside the female body (b1), engaging a comeback preventer valve (b4), with elastic guiding and engaging teeth (13'), which externally take a conic shape in order to fit watertightly a corresponding gasket (13).

In the illustrated case of a hose nozzle connection, the hose nozzle consists of a nozzle body (a1) and a nozzle bushing (a2).

More specifically the nozzle body (a1) has a tightening ring nut (14) with nozzle tip (15) which, before the output bores, in place of the traditional toroidal gaskets, has a watertight ring cup flange (10'). The output adjusting bushing (a2) is screwed on the nozzle body by means of its thread (17). Water, under pressure, flowing through the outlet bores (16), will not be able to go up again through the passage between the bushing (a2) and the nozzle body (a1) because of the watertight cup flange (10'), which will fit closely inside the bushing wall (a2) proportionately to the water counterpressure.

## Claims

1. A watertight joint in molded plastic material for jointing flexible pipes together or with other devices, consisting of:
— one male part (A) with corresponding male fitting piece (1), which is watertightly inserteable into
— a female part (B) comprising:

— a jointing plastic piece (2), shaped at the mating end with a female body (b1) and at the opposite end with an externally threaded portion including an inner externally cone-shaped jointing tube (3) suitable to support the end of the flexible pipe (C) to be connected, said jointing tube being housed inside a pipe clamping toothed crown (4) extending substantially axially from the threaded portion, the teeth of which crown are elastically deflectable towards said jointing tube (4);
— a joint coupling bushing (b3) axially movable to move inwards by conical internal shaping (8, 8') an elastically movable joint clamping means (7);
— an inside cone shaped pipe coupling ring nut (b2), screwable over the pipe to be connected (C) and over the respective crown (4) to push the respective pipe clamping crown teeth against the pipe to realize the tightening condition;
— an optionable inner comeback preventer valve (b4);
characterized in that:
— the toothed crown is integrally moulded with the female body,
— said joint clamping means are integrally molded with the respective jointing plastic piece (2) extend towards the front thereof and comprise an elongate elastically displaceable tongue shaped with a clamping inner tooth (7'); and
— said movement of said joint coupling bushing (b3) is realized by helicoidal pushing springs (5) integrally molded with said joint plastic piece (2) and stretched out from a flange (6) to engage stops (5') on the bushing (b3).

2. A joint according to the claim 1, characterized in that the said male par (A) consists of a jet nozzle device and in this male fitting piece (1) an integrally molded cup-shaped gasket (10') in output direction extended is realized, as tightening means against an adjustable screwable jet cover (a2).

3. A joint according to the claim 1, characterized in that the said jointing plastic piece (2) of said female part (B) has on the abutting end of the mating side (b1), a toothed stopping and fitting flange (9) which fits corresponding guides (9') in the corresponding male body (14), in order to prevent a rotating movement.

4. A joint according to the claim 1, characterized in that guiding ribs means inside said joint coupling bushing (b3) are provided, to engage corresponding guiding means in the female body (2) in order to allow a mutual axial sliding, preventing at the same time rotating movements.

5. A joint according to the claim 1, characterized in that inside female body (2) a shoulder (12) engaging a comeback preventer valve (b4) with watertight external annular gasket (13) is provided, in axial floating condition controlled by elastic feet (13').

## Patentansprüche

1. Eine wasserdichte Verbindung aus gegossenem Kunststoff, um Schläuche miteinander oder mit anderen Geräten zu verbinden, die aus den folgenden Elementen besteht:

— aus einem männlichen Teil (A) mit einem entsprechenden männlichen Einstellungsteil (1), der wasserdicht in einen weiblichen Teil (B) eingeführt werden kann, der aus den folgenden Elementen besteht:

— aus einem aus Kunststoff gemachten Kupplungsteil (2), der am Kupplingsende mit einem weiblichen Körper (B1) profiliert ist, und am entgegengesetzten Ende mit einem Netzstoffteil, der aus einem inneren kegelförmigen Verbindungsrohr (3) besteht, das imstande ist, das Ende der zu verbindenden Schlauche (C) zu halten. Dieses Verbindungsrohr ist innerhalb einer gezahnten Rohrfestziehenskrone (4) gehalten, die sich meistens axial vom Netzstoffsteil ausdehnt. Die Zähne dieser Krone sind in Richtung des Verbindungsrohres (4) elastisch abweichbar;

— aus einem verbindungsverbindenden Teil (B3), der imstande ist, sich axial durch innere kegelförmige Profilierung zu bewegen (8, 8'), um ein elastisch bewegbares Festziehensmittel (7) zu bilden;

— aus einer kegelförmigen Schläucheverbindenden Mutter (B2), die über dem zu verbindenden Rohr (C), oder über den Kronen (4) geschraubt werden kann, um die Zähne der verschiedenen Schläuchefestziehenden Kronen gegen das Rohr zu schieben, und den gewünschten Druck zu bekommen;

— aus einer inneren Klappe, die die Rückkehr vermeidet (B4), und die durch die Tatsache arakterisiert ist, dass:

— die gezähnte Krone vollständig mit dem weiblichen Körper gegossen ist,

— die Festziehensmittel vollständig mit den verschiedenen Kunststoffsteilen (2) gegossen sind, sich in Richtung ihres vorderen Teiles ausdehnen, und eine langförmige elastisch bewegbare Zunge enthalten, die mit einer inneren Festziehenszahn (7') profiliert ist,

— die Bewegung des verbindungsverbindenden Teil (B3) wird durch Feder (5) möglich gemacht, die vollständig mit dem Kunststoffsteil (2) gegossen sind und, die sich aus einer Verschlussklappe (6) ausdehnen, um Feststeller (5') einzusetzen.

2. Eine Verbindung nach dem Patentanspruch 1, die durch die Tatsache charakterisiert ist, dass der männliche Teil (A) aus einer Düse besteht und dass, es in diesem Einstellungsteil (1) eine Becherförmige Armature (10') gibt, die vollständig gegossen ist und, die in der Richtung der Leistung gesetzt ist. Diese Armature dient als Druckmittel gegen eine schraubbare und einstellbare Kappe (A2).

3. Eine Verbindung nach dem Patentanspruch 1, die durch die Tatsache charakterisiert ist, dass der Kunststoffsverbindungsteil (2) des weiblichen Teiles (B), auf der Seite der Kupplung (B1) eine Verschlusskappe (9) enthält, die es möglich macht, die Leiter (9) im entsprechenden männlichen Körper (14) einzustellen, um jede rotierende Bewegung zu vermeiden.

4. Eine Verbindung nach dem Patentanspruch 1, die durch die Tatsache charakterisiert ist, dass es innerhalb des verbindungsverbindenden Teil (B3) Rippensmittel gibt, um die entsprechenden Leitungsmittel im weblichen Körper einzusetzen, was eine gegenseitige axiale Gliederung ermöglicht, und zur gleichen Zeit jede rotierende Bewegung vermeidet.

5. Eine Verbindung nach dem Patentanspruch 1, die durch die Tatsache charakterisiert ist, dass es innerhalb des weiblichen Teiles (2) einen Teil (12) gibt, der eine Rückkehrvermeiden de Klappe einsetzt (B4), die aus einer wasserdichten annularen ausseren Armature besteht, die sich in einer axialen Lage befindet, und durch elastischen Füsse kontrolliert ist (13').

**Revendications**

1. Une jonction imperméable à l'eau en plastique moulé pour joindre des tuyaux flexibles entre eux ou à d'autres appareils, comprenant:

— une partie mâle (A) avec une pièce d'ajustement mâle correspondante (1), pouvant être insériée de façon imperméale dans

— une partie femelle (B) comprenant:

— une pièce de raccordement en plastique (2), profilée du côté de l'accouplement avec un corps femelle (B1) et du côté opposé avec une partie extérieurement filetée comprenant un tube de raccordement interne en form de cône (3) capable de souteñir le bout du tuyau flexible (C) devant être raccordé, ce tube de raccordement étant abrité à l'intérieur d'une couronne dentée de serrage de tuyaux (4) s'étendant en grande partie de façon axiale à partir de la partie filetée. Les dents de cette couronne sont élastiquement déviables vers le tube de raccordement (4);

— une boussole de raccordement de jonctions (B3) capable de se mouvoir vers l'intérieur de façon axiale par profilation conique interne (8, 8'), formant un moyen de serrage de jonctions élastiquement déplaçables (7);

— un écrou d'accouplement de tuyaux en forme de cône (B2), pouvant être vissé par-dessus le tuyau à être raccordé (C) et par-dessus les couronnes respectives (4) afin de pousser les dents des couronnes de serrage de tuyaux respectives contre le tuyau, et d'obtenir ainsi le serrement voulu;

— une valve interne à option destinée à empêcher le retour (B4);

caractérisée par le fait que:

— la couronne dentée est intégralement moulée avec le corps femelle,

— les moyens de serrage de jonctions sont intégralement moulés avec les pièces de plastique respectives (2), s'étendent vers leur partie antérieure et comprennent une langue allongée élastiquement déplaçable, profilée avec une dent interne de serrage (7'),

— le mouvement de la boussole d'accouplement de jonctions (B3) est obtenu grâce à des ressorts hélicoïdaux (5) intégralement moulés avec la pièce de plastique (2) et s'étendant à partir d'une collerette (6) afin de mettre en prise des arrêtoirs (5') sur la boussole (B3).

2. Une jonction selon la revendication 1, caractérisée par le fait que la partie mâle (A) consiste en un appareil d'adjutage et, dans cette pièce d'ajustement mâle (1), on obtient un joint d'étanchéité intégralement moulé en forme de godet (10') placé dans la direction du débit, servant de moyen de serrement contre un couvercle vissable et adjustable (A2).

3. Une jonction selon la revendication 1, caractérisée par le fait que la pièce de raccordement en plastique (2) de la partie femelle (B) comporte, du côté du raccordement (B1), une collerette dentée de blocage et d'ajustement (9) permettant d'ajuster les guides (9') dans le corps mâle correspondant (14), afin d'empêcher tout mouvement rotatif.

4. Une jonction selon la revendication 1, caractérisée par le fait que l'on trouve des moyens de nervure de guidage à l'intérieur de la boussole d'accouplement de jonctions (B3), afin de mettre en prise les moyens de guidage correspondants dans le corps femelle (2) pour permettre un glissement axial mutuel, empêchant en même temps tout mouvement rotatif.

5. Une jonction selon la revendication 1, caractérisée par le fait qu'à l'intérieur du corps femelle (2), on trouve une épaule (12) mettant en prise une valve destinée à empêcher le retour (B4) comprenant un joint d'étanchéité annulaire externe imperméable se trouvant en condition de flottement axial et contrôlé par des pieds élastiques (13').

FIG.1

EP 0 219 705 B1

X–X

FIG. 2

y–y

FIG.4

FIG.3

FIG.5

FIG. 6

FIG. 7